# FASCICULE DE BREVET EUROPEEN

(11) **EP 0 834 084 B1**
(45) Date de publication et mention de la délivrance du brevet: **17.03.1999**
(21) Numéro de dépôt: 96924005.0
(22) Date de dépôt: 21.06.1996
(51) Int. Cl.: G01S 5/00

(54) **SYSTEME DE NAVIGATION PERMETTANT LA COORDINATION EN TEMPS REEL DU DEPLACEMENT DE MOBILES EVOLUANT SANS ETRE A VUE DIRECTE**
NAVIGATIONSSYSTEM ZUR KOORDINATION DER BEWEGUNG VON OBJEKTEN IN ECHTZEIT OHNE DIREKTSICHT
NAVIGATION SYSTEM ENABLING REAL-TIME CO-ORDINATION OF THE MOVEMENTS OF NON-DIRECT-VIEW MOBILE STATIONS

(30) Priorité: 23.06.1995 FR 9507586
(43) Date de publication de la demande: 08.04.1998
(73) Titulaire: THOMSON-CSF, 75008 Paris (FR)
(72) Inventeur: BACELON, Olivier-Thomson-CSF SCPI, F-92402 Courbevoie Cédex (FR); AUGER, Gérard-Thomson-CSF SCPI, F-92402 Courbevoie Cédex (FR); MICHEL, Claude-Thomson-CSF SCPI, F-92402 Courbevoie Cédex (FR)
(74) Mandataire: Lincot, Georges
(86) Numéro de dépôt international: FR9600975
(87) Numéro de publication internationale: WO9701104

(56) Documents cités:
- WO-A-88/06738
- FR-A- 2 632 755
- GB-A- 2 271 486

## Description

La présente invention concerne un système de navigation permettant la coordination en temps réel du déplacement d'au moins deux mobiles évoluant sans être à vue directe. Un premier mobile indique régulièrement à un deuxième mobile distant la nouvelle direction de progression à suivre, et cela sans utiliser de système de transmission visible ou audible. Un tel système est connu de l'état de la technique, notamment de FR-A-2632755

La présente invention s'applique plus particulièrement au contexte du combattant à pied sur le champ de bataille. Elle permet, par exemple, à un chef de groupe, connaissant en permanence la position des membres du groupe de combat, de coordonner leur déplacement en fonction de son propre déplacement.

Les systèmes connus actuellement utilisent soit des moyens de transmission directe de la voix, moyens radio par exemple, soit des moyens visuels, par gestes, jeux de lumières, signaux de fumée, drapeaux, etc.

Ces différents moyens ne sont pas, d'une part, totalement discrets, et d'autre part, peuvent être rapidement mis en difficulté par le relief du terrain et/ou les conditions météorologiques.

La présente invention a pour but de pallier les inconvénients précités.

A cet effet, l'invention a pour objet un système de navigation permettant la coordination en temps réel du déplacement d'au moins deux mobiles distants et évoluant sans être à vue directe, caractérisé en ce qu'il comporte un terminal disposé respectivement sur chaque mobile, chaque terminal comportant :
- un moyen de localisation du mobile,
- un moyen de visualisation de sa progression par rapport à une direction de référence commune,
- un moyen indiquant aux deux mobiles une direction de référence commune couplé au moyen de visualisation,
- un moyen de communication de données de progression, et
- un moyen de traitement des informations délivrées par le moyen indiquant aux deux mobiles une direction de référence commune, le moyen de localisation et le moyen de communication pour les afficher sur le moyen de visualisation,
et en ce qu'au moins un des deux mobiles comporte en outre :
- un moyen de visualisation de la progression du deuxième mobile par rapport à lui, et
- un organe de saisie d'un angle déterminé définissant la correction à apporter à la direction de progression du deuxième mobile par rapport à la nouvelle progression du premier mobile, cette correction étant transmise au deuxième mobile par l'intermédiaire des moyens de communictaion respectifs aux premier et deuxième mobiles.

Le système selon l'invention a pour avantage de combiner des moyens de localisation, de communication et de visualisation simples à mettre en oeuvre, et fournit un système de navigation dont l'interface homme/machine est ergonomique et conviviale, particulièrement bien adapté au contexte où les mobiles sont des piétons.

D'autres avantages et caractéristiques de la présente invention apparaîtront plus clairement à la lecture de la description qui suit et des figures annexées qui représentent :
- la figure 1, un schéma fonctionnel du système de navigation selon l'invention,
- la figure 2, un exemple de visualisation, par le mobile A, de son moyen de visualisation du système selon l'invention,
- la figure 3, un exemple de visualisation, par le mobile B, de son moyen de visualisation du système selon l'invention,
- la figure 4, un exemple d'orientation du moyen de visualisation du mobile A par rapport au Nord et à la nouvelle direction de progression du mobile B,
- les figures 5a et 5b, l'illustration de la méthode utilisée par le mobile A pour saisir la nouvelle direction à suivre par le mobile B,
- la figure 6, une architecture d'un terminal de poignet selon l'invention, porté par le mobile A, et
- la figure 7, une illustration de la saisie d'un nouvel angle d'orientation sur le terminal de poignet du mobile A.

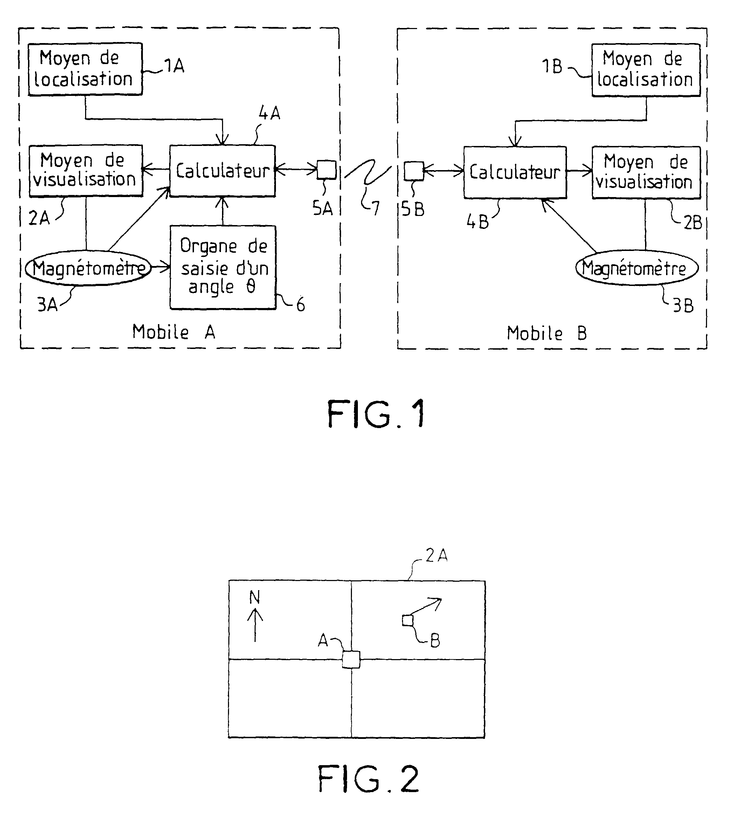

Un schéma fonctionnel d'un système selon l'invention est illustré schématiquement à la figure 1.

Le système selon l'invention comporte, disposés respectivement sur le mobile A et le mobile B :
- un moyen de localisation, 1A, 1B,
- un moyen de visualisation 2A, 2B,
- un moyen, par exemple un magnétomètre, 3A, 3B indiquant aux deux mobiles A et B une direction de référence commune, par exemple le Nord, couplé au moyen de visualisation 2A, 2B,
- un calculateur 4A, 4B recevant les informations issues du moyen de localisation 1A, 1B et du magnétomètre 3A, 3B, et
- un moyen de communication 5A, 5B des données échangées entre mobiles A et B, couplé au calculateur 4A, 4B.

Un des deux mobiles, par exemple A, considéré comme le chef du groupe de combat pour une application combattant, comporte en outre un organe 6 de saisie d'un angle θ, recevant les informations issues du magnétomètre 3A. L'angle θ définit la correction à apporter à la direction de progression du mobile B pour s'aligner sur celle imposée par A.

Le système selon l'invention peut utiliser différents supports de transmission 7 pour l'échange d'informations de position et de progression des mobiles comme par exemple une transmission hertzienne, infrarouge, ultrason, etc.

La figure 2 illustre un exemple de ce que visualise le mobile A sur l'écran de son moyen de visualisation 2A. Cet écran est dans cet exemple de forme rectangulaire carroyé pour former quatre rectangles identiques. Le centre de l'écran affiche la position du mobile A, le rectangle supérieur droit affiche la position du mobile B par rapport à A ainsi que sa progression figurée par une flèche, obtenue à partir de la dernière position reçue, de la vitesse ou de la dernière indication de progression reçue par B au moment de sa validation par B. Le rectangle supérieur gauche affiche la direction du Nord.

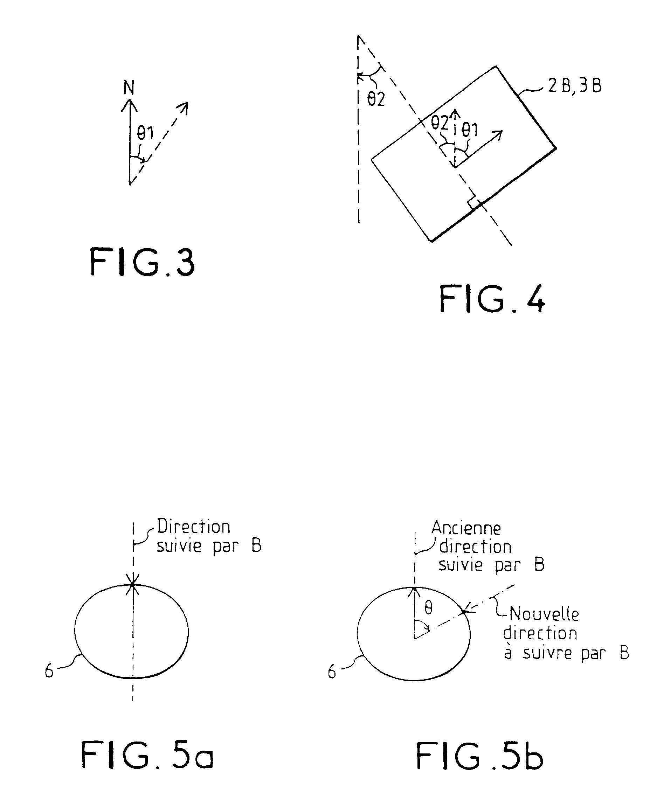

Comme illustré par la figure 3, le mobile B visualise sur son moyen de visualisation 2B une flèche en trait interrompu sur la figure, indiquant sa nouvelle direction de progression, donnée par rapport au Nord ; la nouvelle direction formant avec la direction du Nord, un angle θ₁.

Comme le mobile B dispose d'un magnétomètre 3B couplé à son moyen de visualisation 2B, B visualise sa nouvelle direction de progression θ₁ en fonction de la position de l'écran de son moyen de visualisation 2B par rapport au Nord, sans se soucier de l'orientation θ₂ par rapport au Nord du moyen de visualisation 2B, comme illustré figure 4.

Le mobile A connaît la position de B obtenue par le moyen de localisation 1B de B et transmise par le moyen de communication 5B. Le moyen de visualisation 2B de B affiche sa dernière direction de progression reçue via le moyen de communication 5A et 5B et validée ou affichée par lui-même.

La méthode utilisée par A pour indiquer à B sa nouvelle direction de progression est la suivante illustrée sommairement par les figures 5a et 5b : A dispose d'un magnétomètre 3A. Lorsque A souhaite transmettre à B une nouvelle direction de progression θ par rapport à l'ancienne, il fait pivoter manuellement la flèche associée à la direction de déplacement de B de l'angle θ, par l'intermédiaire de son organe 6 de saisie d'angle θ, pour l'amener à la valeur correspondante puis déclenche la transmission.

La nouvelle direction de progression θ voulue par A est transmise, via les moyens de communication 5A et 5B respectifs aux deux mobiles A et B, au moyen 2B de visualisation de B.

B acquitte alors sa nouvelle direction de progression qui est renvoyée vers A, via les moyens de communication 5B et 5A respectifs aux deux mobiles B et A.

La localisation relative du mobile B par rapport au mobile A peut être assurée par un système de localisation par satellite tel que le GPS, abréviation anglo-saxonne pour "Global Positioning System", en mode différentiel (précision typique comprise entre 2 et 5 m).

Les moyens de localisation 1A et 1B respectifs à A et B sont par exemple tous deux équipés d'un récepteur GPS qui délivre régulièrement leur position ; le moyen de communication de A, 5A, permet ainsi à A de recevoir, par l'intermédiaire du moyen 5B de communication de B, la position de B et d'en déduire ainsi la position relative de B par rapport à A.

Les moyens de communication 5A et 5B respectifs à A et B consistent par exemple en des postes radio intégrant un modem à 9600 bit/s. Les informations échangées sont transmises par exemple aux rythme et débit suivants :
- B transmet sa position toutes les secondes soit 100 octets ou 800 bits maximum, et
- A transmet une nouvelle direction toutes les secondes maximum soit 10 octets ou 80 bits maximum.

Un protocole de type accès aléatoire ou du type accès AMRT, abréviation pour "Accès Multiple à Répartition Temporelle", permet d'assurer la transmission de ces informations.

Enfin, les moyens de visualisation 2A, 2B consistent par exemple, en des terminaux de poignet avec une exploitation spécifique selon que l'on soit le mobile A ou B.

Dans une variante du système selon l'invention, les moyens de localisation 1A et 1B comportent un système de goniométrie et de mesure de distance. Ce dernier peut être par exemple intégré dans le modem des moyens de communication 5A et 5B.

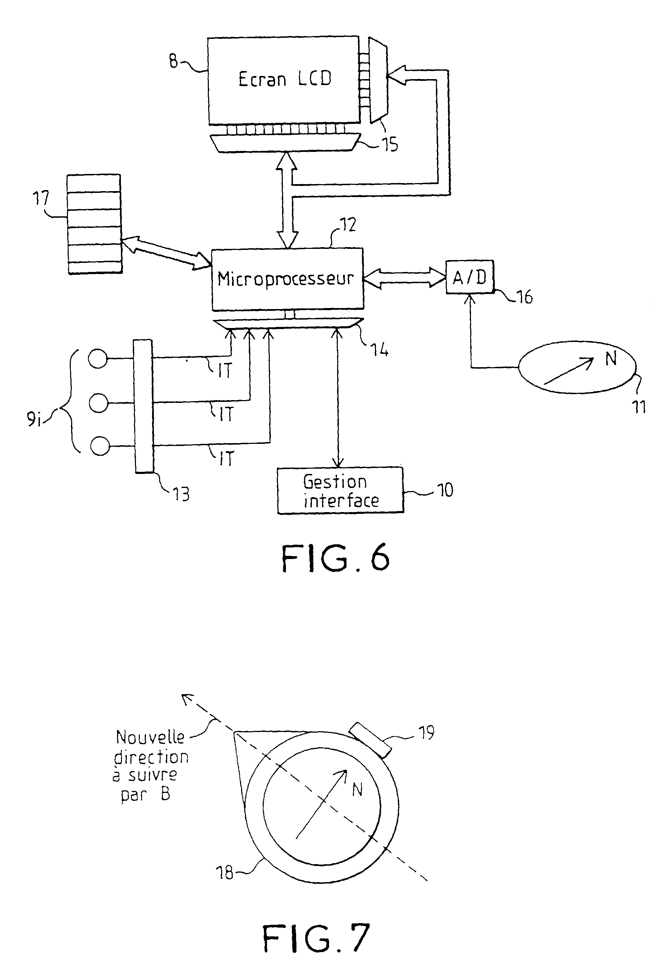

La figure 6 illustre l'architecture d'un terminal de poignet d'un système selon l'invention et permet de comprendre son fonctionnement décrit ci-après. Ce terminal est porté par le mobile A.

Le terminal ou montre est composé par exemple de :
- un écran LCD 8 compatible de la taille du poignet,
- trois boutons de saisie, 9i
- une interface de type RS232 10 par l'intermédiaire de laquelle l'émission/réception des messages sont transmis aux moyens de communication 5A, 5B respectifs à A et B.

La réception de messages entraîne l'affichage d'informations sur l'écran 8.

Par ailleurs, la montre intègre les organes suivants :
- un magnétomètre 11 qui permet de connaître la direction de la montre par rapport au Nord,
- une alimentation sous forme d'une pile jetable non représentée, et
- une unité de traitement 12, un microprocesseur par exemple.

Les boutons 9i font partie de l'organe de saisie 6 non représenté sur cette figure. Lorsqu'un bouton 9i est activé, une interface 13 gère les rebonds afin d'éviter des phénomènes parasites. Une demande d'interruption IT est alors envoyée à un module 14 appelé "module de vectorisation d'IT".

Le module 14 gère l'arrivée simultanée de plusieurs IT sur le microprocesseur 12 par l'analyse d'une table de priorités entre IT.

Lorsque l'IT est reçue par le microprocesseur 12, un programme dépendant de l'IT est lancé soit en envoyant une information vers l'interface RS232 10 en direction de l'autre terminal ; soit en affichant sur l'écran 8 une ou plusieurs icônes déterminées.

Lorsqu'un message est reçu par l'interface RS232 10, une IT est envoyée au microprocesseur 12 qui déclenche une procédure permettant d'afficher sur l'écran 8 une ou plusieurs icônes correspondantes.

Les données d'affichage de l'écran 8 sont transmises à l'écran par l'intermédiaire d'interfaces d'adressage spécifiques 15.

Le magnétomètre 11 délivre un signal analogique qui est converti en un signal numérique par un convertisseur analogique/numérique 16 et le microprocesseur 12 lit cycliquement - toutes les 100 ms par exemple-l'angle délivré par le magnétomètre 11.

L'affichage est déclenché par le microprocesseur 12. En fonction de l'icône à afficher, il va chercher dans une mémoire ROM 17, abréviation anglo-saxonne pour "Read Only Memory", les pixels à activer. Si pour un même affichage plusieurs icônes doivent être superposées, il ne faut pas que l'opérateur voie un phénomène de scintillement.

La figure 7 illustre la saisie de la nouvelle direction à suivre par le mobile A pour le mobile B pour un terminal de type boussolelmontre ; le mobile A fait pivoter la montre de l'angle souhaité par rapport au nord.

Des variantes possibles adaptées au système selon l'invention sans sortir du cadre de la présente invention sont données ci-après à titre d'exemple :
- des moyens de transmission utilisés (hertziens, infrarouges,...)
- du type de moyen de visualisation (calculateur tablette) et de la façon de restituer cette visualisation au mobile (projection sur la visière d'un casque pour un piéton.)
- du moyen employé par A pour afficher la direction de progression suivie par B
- et du moyen de localisation (par balise, GPS, localisation relative par goniométrie et mesure de distance,...).

De plus, le système de visualisation de B peut être remplacé par une indication sonore (synthèse de la parole, son multidimensionnel).

La figure 7 illustre un terminal de type boussole/montre 18 sur laquelle est affichée une flèche donnant la direction du Nord. Le mobile A fait pivoter sa montre de l'angle souhaité par rapport au Nord pour atteindre la nouvelle direction à suivre et saisit cette nouvelle direction, par l'intermédiaire du bouton poussoir 19 pour la transmission de cette nouvelle direction à destination du mobile B.

## Revendications

1. Système de navigation permettant la coordination en temps réel du déplacement d'au moins deux mobiles (A et B) distants et évoluant sans être à vue directe, caractérisé en ce qu'il comporte un terminal disposé respectivement sur chaque mobile (A et B), chaque terminal comportant :
- un moyen de localisation (1A, 1B) du mobile (A et B),
- un moyen de visualisation (2A,2B) de sa progression par rapport à une direction de référence commune,
- un moyen (3A, 3B) indiquant aux deux mobiles (A et B) une direction de référence commune couplé au moyen de visualisation (2A, 2B),
- un moyen de communication (5A,5B) de données de progression, et
- un moyen de traitement (4A, 4B) des informations délivrées par le moyen (3A, 3B) indiquant aux deux mobiles (A et B) la direction de référence commune, le moyen de localisation (1A, 1B) et le moyen de communication (5A,5B) pour les afficher sur le moyen de visualisation (2A, 2B),
et en ce qu'au moins un (A) des deux mobiles (A et B) comporte en outre :
- un moyen de visualisation (2A) de la progression du deuxième mobile (B) par rapport à lui, et
- un organe de saisie (6) d'un angle déterminé (θ) définissant la correction à apporter à la direction de progression du deuxième mobile (B) par rapport à la nouvelle progression du premier mobile (A), cette correction étant transmise au deuxième mobile (B) par l'intermédiaire des moyens de communication (5A, 5B) respectifs aux premier et deuxième mobiles (A et B).

2. Système selon la revendication 1, caractérisé en ce que le moyen de visualisation (2A, 2B) de chaque terminal comporte un écran (8) sur lequel s'affichent les positions des mobiles (A et B) par rapport à la direction de référence commune.

3. Système selon la revendications 2, caractérisé en ce que l'écran (8) du terminal comportant l'organe de saisie d'un angle déterminé (θ), affiche de façon cyclique la position relative des deux mobiles (A et B) et une indication de la progression du deuxième mobile (B).

4. Système selon la revendication 2 ou 3, caractérisé en ce que les écrans de chaque terminal sont des écrans à cristaux liquides dont la taille est compatible de la taille du poignet.

5. Système selon la revendication 4, caractérisé en ce que l'organe (6) de saisie d'un angle (θ) est constitué par l'écran de visualisation (8) lui-même et qui, à partir de la dernière direction de progression du deuxième mobile (B) et de la direction de référence commune, est orienté d'un angle déterminé (θ) pour faire correspondre la direction de progression du deuxième mobile (B) à une nouvelle direction de progression imposée par le premier mobile (A).

6. Système selon l'une quelconque des revendications 1 à 5, caractérisé en ce que le moyen de communication (5A,5B) de chaque mobile (A et B) comporte un modem pour une émission/réception par voie hertzienne (7).

7. Système selon l'une quelconque des revendications 1 à 6, caractérisé en ce que le moyen de localisation (1A, 1B) de chaque mobile (A et B) comporte un système de goniométrie et de mesure de distance.

8. Système selon les revendications 6 et 7, caractérisé en ce que le système de goniométrie et de mesure de distance est intégré dans le modem.

9. Système selon l'une quelconque des revendications 1 à 6, caractérisé en ce que le moyen de localisation (1A,1B) de chaque mobile (A et B) comporte un système de localisation par satellite en mode différentiel.

## Claims

1. Navigation system allowing real-time coordination of the displacement of at least two distant mobiles (A and B) travelling out of direct line of sight, characterized in that it includes a terminal arranged on each mobile (A and B) respectively, each terminal including:
- a means of location (1A, 1B) of the mobile (A and B),
- a means of display (2A, 2B) of its progress with respect to a common reference direction,
- a means (3A, 3B) which indicates to the two mobiles (A and B) a common reference direction and is coupled to the display means (2A, 2B),
- a means of communication (5A, 5B) of progress data, and
- a means (4A, 4B) of processing the information delivered by the means (3A, 3B) which indicates to the two mobiles (A and B) the common reference direction, the locating means (1A, 1B) and the communication means (5A, 5B) so as to display them on the display means (2A, 2B),
and in that at least one (A) of the two mobiles (A and B) furthermore includes:
- a means of display (2A) of the progress of the second mobile (B) with respect thereto, and
- a facility (6) for inputting a specified angle (θ) defining the correction to be made to the direction of progress of the second mobile (B) with respect to the new progress of the first mobile (A), this correction being transmitted to the second mobile (B) by way of the communication means (5A, 5B) respective to the first and second mobiles (A and B).

2. System according to Claim 1, characterized in that the means of display (2A, 2B) of each terminal includes a screen (8) on which are displayed the positions of the mobiles (A and B) with respect to the common reference direction.

3. System according to Claim 2, characterized in that the screen (8) of the terminal including the facility for inputting a specified angle (θ), displays cyclically the relative position of the two mobiles (A and B) and an indication of the progress of the second mobile (B).

4. System according to Claim 2 or 3, characterized in that the screens of each terminal are liquid crystal screens whose size is compatible with the size of the wrist.

5. System according to Claim 4, characterized in that the facility (6) for inputting an angle (θ) consists of the display screen (8) itself and which, on the basis of the last direction of progress of the second mobile (B) and of the common reference direction, is oriented by a specified angle (θ) so as to make the direction of progress of the second mobile (B) correspond with a new direction of progress imposed by the first mobile (A).

6. System according to any one of Claims 1 to 5, characterized in that the means of communication (5A, 5B) of each mobile (A and B) includes a modem for hertzian-mode send/receive (7).

7. System according to any one of Claims 1 to 6, characterized in that the locating means (1A, 1B) of each mobile (A and B) includes a direction-finding and distance-measuring system.

8. System according to Claims 6 and 7, characterized in that the direction-finding and distance-measuring system is built into the modem.

9. System according to any one of Claims 1 to 6, characterized in that the locating means (1A, 1B) of each mobile (A and B) includes a differential-mode satellite location system.

## Patentansprüche

1. Navigationssystem, in dem die Koordination der Bewegung mindestens zweier Mobile (A, B) ermöglicht wird, die voneinander entfernt sind und sich ohne direkte gegenseitige Sicht bewegen, dadurch gekennzeichnet, daß es ein Endgerät an jedem der Mobile (A, B) aufweist, das enthält:
- ein Ortungsmittel (1A, 1B) des Mobils (A, B),
- ein Anzeigemittel (2A, 2B) für die Bewegung bezüglich einer gemeinsamen Bezugsrichtung,
- ein Mittel (3A, 3B), das den beiden Mobilen (A, B) eine gemeinsame Bezugsrichtung angibt und an das Anzeigemittel (2A, 2B) gekoppelt ist,
- ein Übertragungsmittel (5A, 5B) für die Bewegungsdaten,
- und ein Mittel (4A, 4B) zur Verarbeitung der Informationen, die von dem Mittel (3A, 3B), das den beiden Mobilen (A, B) die gemeinsame Bezugsrichtung angibt, von dem Ortungsmittel (1A, 1B) und dem Übertragungsmittel (5A, 5B) geliefertwerden um sie auf dem Anzeigemittel (2A, 2B) zur Anzeige zu bringen,
und daß mindestens eines (A) der beiden Mobile (A, B) außer-dem aufweist:
- ein Anzeigemittel für die Bewegung des zweiten Mobils (B) bezüglich des ersten Mobils,
- und ein Organ (6) zur Eingabe eines bestimmten Winkels, um den die Bewegungsrichtung des zweiten Mobils bezüglich der neuen Bewegungsrichtung des ersten Mobils (A) zu korrigieren ist, wobei diese Korrektur an das zweite Mobil (B) über die Übertragungsmittel (5A, 5B) des ersten bzw. zweiten Mobils (A, B) übermittelt wird.

2. System nach Anspruch 1, dadurch gekennzeichnet, daß das Anzeigemittel (2A, 2B) jedes Endgeräts einen Bildschirm (8) aufweist, auf dem die Positionen der Mobile (A, B) bezüglich der gemeinsamen Bezugsrichtung angezeigt werden.

3. System nach Anspruch 2, dadurch gekennzeichnet, daß der Bildschirm (8) des Endgeräts ein Organ zur Eingabe eines bestimmten Winkels (θ) aufweist und zyklisch die relative Position der beiden Mobile (A, B) sowie eine Angabe bezüglich der Bewegung des zweiten Mobils (B) anzeigt.

4. System nach Anspruch 2 oder 3, dadurch gekennzeichnet, daß die Bildschirme jedes Endgeräts Flüssigkristallbildschirme sind, deren Größe mit dem Handgelenk des Trägers kompatibel ist.

5. System nach Anspruch 4, dadurch gekennzeichnet, daß das Organ (6)zur Erfassung eines Winkels (θ) aus dem Anzeigebildschirm (8) selbst besteht, der ausgehend von der letzten Bewegungsrichtung des zweiten Mobils (B) und der gemeinsamen Bezugsrichtung um einen bestimmten Winkel (θ) orientiert wird, bis die Bewegungsrichtung des zweiten Mobils (B) der vom ersten Mobil (A) vorgegebenen neuen Richtung entspricht.

6. System nach einem beliebigen der Ansprüche 1 bis 5, dadurch gekennzeichnet, daß das Übertragungsmittel (5A, 5B) jedes Mobils (A, B) ein Modem für einen Sende/Empfang (7) von Funkwellen besitzt.

7. System nach einem beliebigen der Ansprüche 1 bis 6, dadurch gekennzeichnet, daß das Ortungsmittel (1A, 1B) jedes Mobils (A, B) ein Winkel- und Entfernungsmeßsystem enthält.

8. System nach den Ansprüchen 6 und 7, dadurch gekennzeichnet, daß das Winkel- und Entfernungsmeßsystem in das Modem integriert ist.

9. System nach einem beliebigen der Ansprüche 1 bis 6, dadurch gekennzeichnet, daß das Ortungsmittel (1A, 1B) jedes Mobils (A, B) ein differentiell wirkendes Satellitenortungssystem enthält.
